# EUROPÄISCHE PATENTSCHRIFT

(11) **EP 1 694 983 B1**
(45) Veröffentlichungstag und Bekanntmachung des Hinweises auf die Patenterteilung: **13.02.2013**
(21) Anmeldenummer: 04820372.3
(22) Anmeldetag: 07.12.2004
(51) Int. Cl.: F16G 1/28, F16H 55/38

(54) **RIEMENSCHEIBE UND NOPPENRIEMEN FÜR RIEMENANTRIEBE**
PULLEY AND NUBBED BELT FOR BELT DRIVES
POULIE A COURROIE ET COURROIE A PICOTS DESTINEES A DES ENTRAINEMENTS A COURROIE

(30) Priorität: 17.12.2003 AT 20372003
(43) Veröffentlichungstag der Anmeldung: 30.08.2006
(73) Patentinhaber: HÖGN, Andreas, A-3340 Waidhofen an der Ybbs (AT)
(72) Erfinder: HÖGN, Andreas, A-3340 Waidhofen an der Ybbs (AT)
(86) Internationale Anmeldenummer: PCT/AT2004/000431
(87) Internationale Veröffentlichungsnummer: WO 2005/059400

(56) Entgegenhaltungen:
- AT-B- 299 630
- DE-U1- 29 823 929
- FR-A- 1 113 501
- FR-A- 2 520 466
- GB-A- 479 757
- US-A- 4 072 062
- US-A- 4 568 320
- US-A- 5 484 321

## Beschreibung

Die Erfindung betrifft eine Riemenscheibe für Noppenriemen bei einem formschlüssigen und selbstführenden Riementrieb, wobei die Noppenriemen an ihrer Lauffläche als Noppen ausgebildete Vorsprünge z.B. in Scheiben- oder Kegelstumpfform in einer wiederkehrenden geometrischen Anordnung aufweisen und die Oberfläche der Riemenscheibe mit Ausnehmungen in korrespondierender Anordnung ausgebildet ist, in die die Noppen eingreifen, sowie einen Noppenriemen.

Moderne Riementriebe der Antriebstechnik bedienen sich meist der weit verbreiteten Zahnriemen, die auf der Laufflä-che eine Verzahnung aufweisen, welche sich am Umfang der Riemenscheibe sowohl antriebs- als auch abtriebsseitig wieder findet. Daneben sind auch Noppenriementriebe bekannt, bei welchen die Lauffläche mit noppenartigen Vorsprüngen in wiederkehrender geometrischer Anordnung ausgestattet ist, die zusammen mit komplementär ausgebildeten Riemenscheiben eine formschlüssige selbstführende Antriebsanordnung bilden.

Die gattungsbildenden Schriften FR 1 113 501 A, US 4 072 062 A, FR 2 520466 A und US 5 484 321 A zeigen welche als Riemenscheiben für Noppenriemen verwendbar sind, wobei alle Vertiefungen an den Mantelflächen der Scheiben, welche für den Eingriff von Noppen des Noppenriemens vorgesehen sind zu den Stirnflächen der Scheiben hin offen sind. Die dafür vorgesehen Riemen sind gleich breit wie einzelnen Scheiben. Für die Übertragung großer Kräfte sind damit sehr klobige Riemen erforderlich welche polygonartig abrollen und damit ein Rütteln der Gesamtanordnung sowie ein klappernden Geräusch verursachen.

In der DE 298 23 929U1 ist eine Anordnung beschrieben, wobei die Noppen in einigen parallelen Reihen senkrecht oder in einem Winkel von z.B. 30 bis 45° zur Laufrichtung angeordnet sind. Wie bei allen Riementrieben erfordert die Übertragung höherer Drehmomente eine größere Riemenbreite und damit breitere Riemenscheiben. Letztere sind für Noppenriemen mit Ausnehmungen an der Oberfläche ausgestattet, die die Noppen aufnehmen, sodass eine Kraftübertragung möglich wird. Die Herstellung von Riemenscheiben für Noppenriemen erfordert Werkzeuge wie etwa Formen für Kunststoff oder Metallausführungen, die mit Schiebern ausgestattet sind, welche die Kerne für die Noppenaus-nehmungen in der Lauffläche der Noppenscheiben darstellen. Diese Kerne müssen beim Entfernen zurückziehbar sein. Der Aufwand für eine solche Ausführung ist herstellungstechnisch groß.

Die Erfindung zielt darauf ab, eine Riemenscheibe für breite Noppenriemen der in der DE 298 23 929 U1 beschriebenen Art wesentlich einfacher und kostengünstiger herstellen zu können. Dies wir mit einer besonderen Anordnung und Formgebung der Ausnehmungen dadurch erreicht, dass sämtliche Ausnehmungen an den seitlichen Rändern der Riemenscheibe liegen und in axialer Richtung zur Seite hin offen sind und dass zwei oder mehr solcher Riemenscheiben auf gleicher Achse drehfest aneinander liegen.

Eine Guss- oder Spritzform für eine Riemenscheibe dieser Bauart bedarf bloß zweier kreiszylindrischer Hälften (Formkästen) mit je einer kreiszylindrischen Ausnehmung im Durchmesser der gewünschten Riemenscheibe. Auf der inneren Mantelfläche jeder Formhälfte sind die Kerne für die Ausnehmungen der Riemenscheibe als permanente Vorsprünge (vorspringende Wandteile) einstückig mit der Formhälfte ausgebildet. Eine zweckmäßige Ausführungsform sieht vor, dass die Ausnehmungen in Draufsicht im wesentlichen U-förmig ausgebildet sind und die U-förmigen Ausnehmungen die Vorsprünge, insbesondere die Basiskreise der scheiben- oder kegelstumpfförmigen Noppen, zumindest teilweise, umfassen. Die U-Form bildet eine seitliche Öffnung. Es liegen an beiden seitlichen Rändern jeweils in gleichen Abständen derartige Ausnehmungen um eine halbe Winkelteilung zueinander versetzt. Ein darüber laufender Noppenriemen weist etwa scheiben- oder pillenförmige Noppen auf, die in die U-Form eintauchen und sich in die U-Form an die halbkreisförmige Fläche anlegen, um das Drehmoment zu übertragen. Natürlich können die Noppen statt der üblichen Pillenform auch das Positiv zu den Ausnehmungen darstellen und selbst auch in Draufsicht U-förmig sein. Im Hinblick auf das Entformen ist es zweckmäßig, wenn die an die seitlichen Öffnungen der U-förmigen Ausnehmungen anschließenden Flanken der Ausnehmungen parallel verlaufen oder von der Öffnung ausgehend zueinander konvergieren. Dann ist ein Öffnen der Form und Lösen der geformten Riemenscheibe problemlos. Mehrere solcher Riemenscheiben können für breitere Noppenriemen zu einer Walze aneinandergefügt werden. In diesem Fall sieht eine der Ausführungsformen vor, dass die Ausnehmungen jeweils die komplementäre Form einer in Laufrichtung halbierten Noppe aufweisen und in Draufsicht vorzugsweise halbkreisförmig ausgebildet sind. Jede der einzelnen Noppenscheiben ist relativ schmal und weist.nur randseitig jeweils nach außen offene halbzylindrische (D-förmige) Ausnehmungen auf. Wird eine weitere solche Riemenscheibe seitlich angeschlossen, dann ergänzen sich die Ausnehmungen zu einer zu den Noppen komplementären Form, also z.B. zu einer ganzen flachen kreiszylindrischen Ausnehmung. Eine solche Riemenscheibe als Teil einer ganzen Riemenscheibe ist leicht und kostengünstig sowie maßgenau herstellbar. Es können auch andere mittelsymmetrische Noppenformen, z.B. als Hälbkugelformen, eingesetzt werden.

Wie erwähnt, können durch Aneinanderreihung beliebig breite Riemenscheiben ausgebaut werden. Dazu ist es vorteilhaft, wenn die Bohrung für die Drehachse zwei im Winkel zueinander versetzte Nuten zum Aufbau schichtenartig zusammengesetzter mehrfach breiter Riemenscheiben mit winkelversetzten Ausnehmungen aufweist und wenn die Achse mit einer Rippe als Mitnehmer ausgebildet ist. Um ein Paket aus einer Mehrzahl von gleichen relativ schmalen einzelnen Riemenscheiben zusammenzusetzen, können an den Flachseiten jeder Riemenscheibe Formschlussverbindungen für den Aufbau schichtenartig zusammengesetzter Riemenscheiben vorgesehen sein.

Bekannte Noppenschreiben sind mit Noppen in der Art von Pillen, also als flache Kreiszylinder ausgebildet. Diese sind sehr gut für die erfindungsgemäß geformten Riemenscheiben geeignet. Um eine noch bessere Anpassung an die Gestaltung der Ausnehmungen an der Umfangsfläche der Riemenscheibe zu erreichen und damit die Übertragungsleistung eines Riementriebes zu erhöhen, ist es zweckmäßig, wenn die Noppen die Raumform eines flachen Zylinders oder flachen Kegels auf der Basis einer Ellipse oder eines Ovals oder eine Quaderform mit anschließendem halben Kreiszylinder aufweisen, wobei die Stirnfläche gegebenenfalls ballig oder abgerundet ausgebildet sind. Auch diese Noppen können in Reihen nebeneinander sowie mit Überlappungen und zueinander versetzt angeordnet sein.

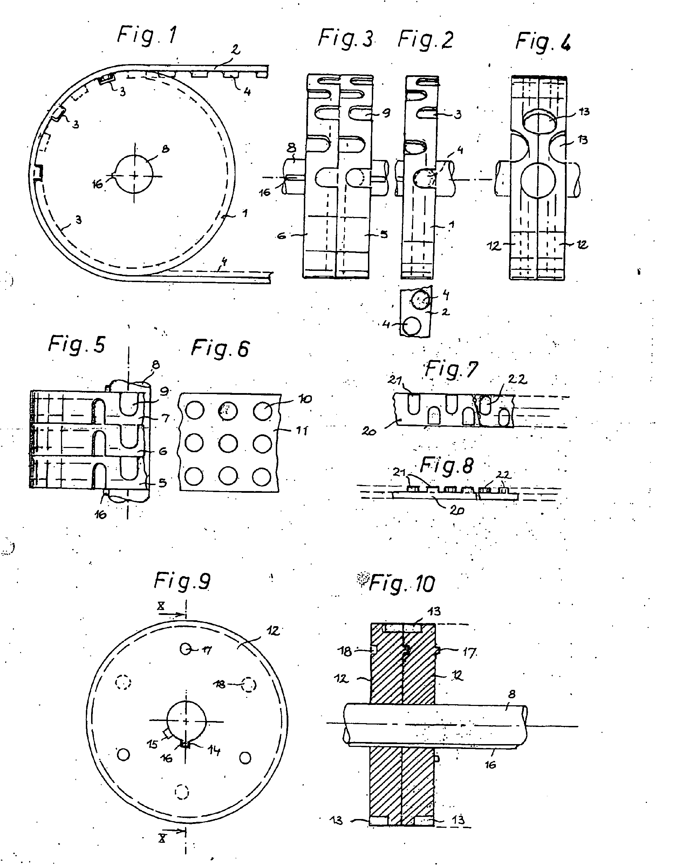

Ausführungsbeispiele zum Erfindungsgegenstand sind in den Zeichnungen dargestellt. Fig. 1 zeigt die Antriebsseite eines Riementriebes mit Noppenriemen und Riemenscheibe in Seitenansicht, Fig. 2 eine einzelne Riemenscheibe in Laufrichtung des Noppenriemens gesehen, Fig. 3 eine Variante zu Fig. 2 mit mehreren Riemenscheiben auf gleicher Achse, Fig. 4 eine Ansicht wie Fig. 3, jedoch mit einer anderen Ausbildung der Ausnehmungen für die Noppen des Noppenriemens, Fig. 5 eine Teilansicht der Riemenscheiben aus Fig. 1 von oben, Fig. 6 eine Teilansicht einer Lauffläche eines bekannten Noppenriemens, Fig. 7 eine Teilansicht der Lauffläche eines neuen Noppenriemens in einer Ausführung für nur eine Riemenscheibe, Fig. 8 eine Seitenansicht zu Fig. 7, Fig. 9 eine Seitenansicht einer Riemenscheibe auf einer Welle und Fig. 10 einen Querschnitt zu Fig. 9 nach der Linie X-X in Fig. 9.

Eine Riemenscheibe 1 nach Fig. 1 und 2 für einen Riementrieb mit einem Noppenriemen 2, weist an seinem Umfang Ausnehmungen 3 auf, die nicht wie üblich für kreiszylindrische (pillenförmige) Noppen als komplementäre kreiszylindrische Vertiefungen, sondern als Schlitze ausgebildet sind, die sich in ihrer Breite entsprechend dem Noppendurchmesser bis über den Rand der Noppenscheibe 1 erstrecken und dort offen sind. Diese Ausnehmungen 2 sind abwechselnd am linken und rechten Rand offen, sodass ein Noppenriemen 2, wie er zu Fig. 2 angedeutet ist, mit der Riemenscheibe 1 eine formschlüssige Verbindung zur Übertragung eines Drehmomentes eingeht. Es sind dabei die Noppe 4 des Noppenriemens 2 zueinander abwechselnd jeweils etwas nach links und rechts zur Seite (den Rand annähernd tangierend) versetzt.

Der besondere Vorteil dieser Ausführung der Riemenscheibe 1 liegt in der Herstellung, da bloß eine zweiteilige Form ohne bewegliche Kerne erforderlich ist, weil sich die Ausnehmungen am Umfang bis an den Rand erstrecken.

In Fig. 3 bzw. Fig. 5 und 6 sind Riemenscheiben 5, 6 bzw. 7 dargestellt, die auf einer Achse 8 drehfest angeordnet sind. Die Ausnehmungen 9 reichen wieder jeweils bis an den Rand und sind zum jeweiligen Rand offen. Bei dieser Ausführung liegen die Noppen 10 eines entsprechend breiten Noppenriemens 11 in Reihen hintereinander und nebeneinander ohne seitlicher Versetzung. Natürlich kann auch aus der Riemenscheibe 1 durch Aneinanderfügen gleicher Exemplare eine entsprechend breite Riemenscheibe gebildet werden. Dies gilt ebenso für den schmalen Noppenriemen 2, der in jeder beliebigen Breite zur Verfügung steht. In Fig. 4 ist eine Besonderheit dargestellt. Ähnlich wie bei Fig. 2 sind dort Riemenscheiben 12 mit Ausnehmungen 13 mit halbkreisförmigem Grundriss dargestellt. Es wird wieder nur eine zweiteilige Form benötigt, um die Riemenscheibe 12 herzustellen. Eine Riemenscheibe 12 allein kann bereits zur Übertragung eines Drehmomentes zusammen mit einem Noppenriemen eingesetzt werden, der halbkreisförmige Noppen in Überlappung hinsichtlich der Mittellinie des Noppenriemens trägt.

Wenn, so wie in Fig. 4 dargestellt, mehrere solcher Riemenscheiben gemeinsam auf einer Achse 8 angeordnet werden, um höhere Drehmomente zu übertragen, dann kann jede zweite Riemenscheibe 12 um einen Teilungswinkel verdreht auf die Welle aufgesteckt werden - wie dies etwa Fig. 9 zeigt. Dort hat die Riemenscheibe 12 in der Bohrung zwei Nuten 14, 15, sodass die Riemenscheibe 12 in drei Winkelstellungen auf eine Feder oder Rippe 16 der Achse 8 aufgesteckt werden kann. Zusätzlich sind noch Formschlussverbindungen (z.B. drei Nasen 17 bzw. sechs Vertiefungen 18) auf den einander gegenüberliegenden Flachseiten der Riemenscheibe 12 vorgesehen. Bei entsprechender Abstimmung der gegenseitigen Winkellage auf die Teilungswinkel der Ausnehmungen 13, ergänzen sich jeweils zwei einander unmittelbar gegenüberliegende Ausnehmungen 13 zu einer Noppe 4 mit kreisförmigem Grundriss, wie sie beispielsweise in Fig. 2 unten bei einem schmalen Riemen dargestellt ist. Wesentlich ist auch hier der herstellungstechnologische Vorteil, wie er bereits beschrieben wurde.

Um die in den Fig. 2, 3 und 5 dargestellten Ausnehmungen 3 bzw. 9 hinsichtlich ihrer Eigenschaft zur Übertragung eines Drehmomentes voll nutzen zu können, ist es gemäß Fig. 7 und 8 zweckmäßig, einen Noppenriemen 20 mit Noppen 21 auszubilden, die die Ausnehmungen 3 bzw. 9 in größerem Ausmaß, vorzugsweise zur Gänze (also bis zum Rand) ausfüllen. Die Noppen 21 haben hier die Form eines halben flachen Kreiszylinders, an dessen Diagonale ein flacher Quader anschließt, das bis an den Rand des Noppenriemens 20 reicht. Natürlich kann der Noppenriemen 20 eine Breite aufweisen die einem Mehrfachen der Darstellung nach Fig. 7 entspricht.

In Fig. 7 ist als Variante eine Noppe 22 dargestellt, die im Grundriss als Oval bzw. elliptisch ausgebildet ist. Die darauf aufbauende Raumform kann einem Zylinder mit parallelen Erzeugenden längs des Ovals oder der Ellipse oder einem Kegel mit konvergierenden Erzeugenden durch das Oval oder die Ellipse als Basis entsprechen. Es sind natürlich auch Abrundungen und ballige Stirnflächen zu dieser Raumform möglich.

## Patentansprüche

1. Riemenscheiben und Noppenriemen bei einem formschlüssigen und selbstführenden Riementrieb, wobei der Noppenriemen an seiner Lauffläche als Noppen ausgebildete Vorsprünge z.B. in scheiben- oder kegelstumpfform in einer wiederkehrenden geometrischen Anordnung aufweist und die Oberfläche der Riemenscheiben mit Ausnehmungen in korrespondierender Anordnung ausgebildet ist, in die die Noppen eingreifen, wobei sämtliche Ausnehmungen an den seitlichen Rändern einer Riemenscheibe liegen und in axialer Richtung zur Seite hin offen sind, **dadurch gekennzeichnet, dass** mehrere solcher Riemenscheiben (1, 5, 6, 7, 12) auf gleicher Achse (8) drehfest aneinander liegen und dass sich die Breite eines mit diesen zusammenwirkenden Noppenriemens über mehrere dieser Riemenscheiben erstreckt.

2. Riemenscheiben und Noppenriemen nach Anspruch 1, **dadurch gekennzeichnet, dass** die Ausnehmungen (3, 9, 13) Flanken aufweisen, welche von der seitlichen Öffnung der Ausnehmung ausgehend, entweder parallel zueinander verlaufen oder zueinander konvergieren.

3. Riemenscheiben und Noppenriemen nach Anspruch 1 oder Anspruch 2, **dadurch gekennzeichnet, dass** die Bohrung für die Drehachse (8) zwei im Winkel zueinander versetzte Nuten (14, 15) zum Aufbau schichtenartig zusammengesetzter mehrfach breiter Riemenscheiben (12) mit winkelversetzten Ausnehmungen aufweist und dass die Achse (8) mit einer Rippe (16) als Mitnehmer ausgebildet ist.

4. Riemenscheiben und Noppenriemen nach einem der Ansprüche 1 bis 3, **dadurch gekennzeichnet, dass** an den Flachseiten jeder Riemenscheibe (12) Formschlussverbindungen für den Aufbau schichtenartig zusammengesetzter Riemenscheiben (12) vorgesehen sind.

5. Riemenscheiben und Noppenriemen nach einem der bisherigen Ansprüche, **dadurch gekennzeichnet, dass** die Noppen (21, 22) die Raumform eines flachen Zylinders oder flachen Kegels auf der Basis einer Ellipse oder eines Ovals oder eine Quaderform mit anschliessendem halben Kreiszylinder aufweisen, wobei die Stirnflächen gegebenenfalls ballig oder abgerundet ausgebildet sind.

## Claims

1. Belt pulley and knobbed belt in a form-fitting and self-guiding belt drive, whereby the knobbed belt exhibits knob-like projections on its running surface in the shape of discs or conic sections in a repeating geometric arrangement and the surface of the belt pulley exhibits recesses in a corresponding arrangement into which the knobs enter, whereby all recesses are situated on the side edges of a belt pulley and are open toward the side of the belt pulley in the axial direction, **characterised in that** multiple such belt pulleys (1, 5, 6, 7, 12) are situated adjacent along the same axis (8) and locked into the same rotation and that the width of a knobbed belt interacting with this assembly extends across multiple such belt pulleys.

2. Belt pulley and knobbed belt according to claim 1, **characterised in that** the recesses (3, 9, 13) have side edges that run either parallel to each other or converge from the side opening of the recess.

3. Belt pulley and knobbed belt according to claim 1 or claim 2, **characterised in that** the hole for the axle of rotation (8) has two grooves offset at an angle to each other (14, 15) for the assembling of layer assemblies of multiple wide belt pulleys (12) with recesses offset at angles and **in that** the axle (8) is shaped with a rib (16) that acts as a driver.

4. Belt pulley and knobbed belt according to one of the claims 1 to 3, **characterised in that** form-fitting connections for the assembling of layered assemblies of belt pulleys (12) are situated on the flat sides of each belt pulley (12). (Fig. 9, 10).

5. Belt pulley and knobbed belt according to one of the previous claims, **characterised in that** the knobs (21, 22) have the shape of a flat cylinder or a flat cone with an elliptical or oval or rectangular base with adjacent semicircular cylinder, whereby the face surfaces may have a convex or rounded shape. (Fig. 7, 8)

## Revendications

1. Poulie à courroie et courroie à entraîneurs dorsaux en présence d'un entraînement à courroie à guidage automatique par engagement positif, la courroie à entraîneurs dorsaux présentant sur sa surface de roulement des taquets en forme de boutons, par ex. de disque ou de forme tronconique de disposition géométrique récurrente et la surface des poulies à courroie présentant des creux disposés de façon correspondante, dans lesquels les boutons s'engrènent, tous les creux étant disposés aux bords latéraux d'une poulie à courroie et étant ouverts vers le côté dans le sens axial, **caractérisée en ce que** plusieurs poulies à courroie de ce genre (1, 5, 6, 7, 12) reposent de façon non tournante les unes sur les autres sur un même axe (8) et que la largeur d'une courroie à entraîneurs dorsaux en interaction avec celles-ci s'étend sur plusieurs de ces poulies à courroie.

2. Poulie à courroie et courroie à entraîneurs dorsaux selon la revendication 1, **caractérisées en ce que** les creux (3, 9, 13) présentent des flancs, partant de l'ouverture latérale du creux, disposés soit en parallèle soit convergents les uns par rapport aux autres.

3. Poulie à courroie et courroie à entraîneurs dorsaux selon la revendication 1 ou 2, **caractérisées en ce que** le trou pour l'axe de rotation (8) présente deux rainures (14, 15) disposées dans un décalage angulaire l'une par rapport à l'autre pour l'empilage de poulies à courroie (12) d'épaisseur multiple assemblées en couches, avec des creux à décalage angulaire et que l'axe (8) est formé avec une arête (16) comme entraîneur.

4. Poulie à courroie et courroie à entraîneurs dorsaux selon l'une des revendications 1 à 3, **caractérisées en ce que** des liaisons par engagement positif sont prévues sur les côtés plats de chaque poulie à courroie (12) pour l'empilage des poulies à courroie (12) assemblées en couches. (Fig. 9, 10).

5. Poulies à courroie et courroie à entraîneurs dorsaux selon l'une des revendications ci-dessus, **caractérisées en ce que** les entraîneurs (21, 22) présentent la forme d'un cylindre plat ou d'un cône plat sur la base d'une ellipse ou d'un ovale ou d'une forme carrée suivie d'un demi-cylindre circulaire, la surface de contact pouvant être, le cas échéant, de forme bombée ou arrondie. (Fig. 7, 8).
